# EUROPÄISCHE PATENTSCHRIFT

(11) **EP 1 099 741 B1**
(45) Veröffentlichungstag und Bekanntmachung des Hinweises auf die Patenterteilung: **26.07.2006**
(21) Anmeldenummer: 00122927.7
(22) Anmeldetag: 21.10.2000
(51) Int. Cl.: C09J 123/08

(54) **Klebmassezusammensetzung und damit hergestellte Oberflächenschutzfolien**
Adhesive composition and surface protective films produced therefrom
Masse adhésive et son application dans la préparation de films pour la protection de surfaces ¬1995/

(30) Priorität: 13.11.1999 DE 19954700
(43) Veröffentlichungstag der Anmeldung: 16.05.2001
(73) Patentinhaber: tesa AG, 20253 Hamburg (DE)
(72) Erfinder: Böhm, Nicolai, 20257 Hamburg (DE)

(56) Entgegenhaltungen:
- EP-A- 0 592 913
- EP-A- 0 888 786
- GB-A- 940 713
- US-A- 3 808 294
- US-A- 5 925 456

## Beschreibung

Die Erfindung betrifft eine Klebmasse, die besonders für den Einsatz auf Schutzfolien für glänzende Oberflächen wie Kunststoffe, Metalle, Glas und Lacke geeignet ist. Diese Masse erlaubt die Herstellung langlebiger, gut von der Rolle abwickelbarer, sicher haftender, dennoch leicht und rückstandsfrei entfernbarer Oberflächenschutzfolien.

Neben der Funktion bestimmt heute auch das einwandfreie Erscheinungsbild den Verkaufserfolg einer Ware. Ein wichtiger Gestaltungsfaktor ist dabei die Oberfläche des Artikels, die häufig dekorativ poliert oder glänzend lackiert ist oder die aus optischen Gründen kratzerfrei sein muß, wie insbesondere Glasflächen. Um dem Kunden die Ware in einwandfreiem Zustand verkaufen zu können, ist daher Oberflächenschutz, besonders in Form selbstklebender Folien, vorteilhaft. Dieses Verfahren hat sich seit einigen Jahren besonders im Automobilbau durchgesetzt, wo exponierte Lackflächen wie Dach, Motorhaube und Kofferraumdeckel durch selbstklebende Folien großflächig vor Umwelteinflüssen und mechanischen Beschädigungen geschützt werden.

Die Anforderungen an einen großflächig aufgebrachten selbstklebenden Artikel sind hoch. So muß sich die Folienbahn leicht und verdehnungsfrei von der Rolle abwickeln lassen. Gefordert sind eine ausreichende Anfangsklebkraft und eine Endverklebungsfestigkeit, die nach wenigen Tagen erreicht sein sollte. Falls die Folie Freibewitterung ausgesetzt ist, muß eine ausreichende Klebkraft auch bei hoher Luftfeuchte oder gar Regen erhalten bleiben. Die Endverklebungsfestigkeit muß so ausgewogen sein, daß die Folie nicht durch Wind oder Fahrtwind abgelöst wird, aber auch keinen zu großen Kraftaufwand beim Entfernen erfordert. Dabei muß sie belag- und rückstandsfrei ablösbar sein und eine je nach Anforderung ausreichende Lichtbeständigkeit haben. Darüber hinaus darf die Klebmasse den zu schützenden Haftgrund nicht in seiner Qualität negativ beeinflussen, was insbesondere bei Lacken durch irreversible Deformationen in Erscheinung tritt.

Der Oberflächenschutzartikel muß eine Dehnfähigkeit aufweisen, die eine idealerweise faltenfreie Beklebung auch gewölbter Oberflächen ermöglicht. Besonders im Fall transparenter Oberflächenschutzprodukte muß der Artikel blasenfrei auf die Oberfläche auftragbar sein. Ein wesentlicher Teil dieser hohen Anforderungen wird maßgeblich durch die Klebmasseeigenschaften beeinflußt.

Häufige Anwendung finden Selbstklebemassen auf Basis von Polyisobutylen (PIB) oder Acrylsäureesterpolymeren. PIB hat eine sehr schlechte Anfangsklebkraft, was zum vorzeitigen selbsttätigen Ablösen führen kann, und außerdem nur eine sehr begrenzte Endklebkraft. Insbesondere beobachtet man bei PIB "Abplatzeffekte", d.h. eine schlagartig absinkende Klebkraft bei hohen Abzugsgeschwindigkeiten, so daß vollflächige Ablösung bereits bei Flattern im Wind auftreten kann.
Es kann durch PIB-ausgerüstete Produkte zu verkehrsgefährdenden Situationen durch vollständig abgelöste Folien kommen, die nachfolgenden Fahrzeugen auf die Scheibe wehen.

Acrylsäureesterpolymere neigen zu Beeinträchtigung insbesondere lackierter Oberflächen durch Mattierung der hochglänzenden Fläche.
In DE 196 35 704 A1 wird eine selbstklebende Oberflächenschutzfolie aus Polyolefinen mit einem Kleber aus Polyethylenvinylacetat (EVA) mit einem Vinylacetatgehalt von 40 Mol-% bis 80 Mol-%, insbesondere 70 Mol-%, und mit einem Verlustwinkel tan δ von 0,6 bis 1,0, gemessen bei einer Temperatur von 60 °C und einer Frequenz von 10⁻² Hz, und von 0,4 bis 0,7, gemessen bei einer Temperatur von 60 °C und einer Frequenz von 10 Hz beschrieben. EVA in der beanspruchten Form verfügt über eine gute Anfangshaftkraft auf Lack und eine gute Lackverträglichkeit. Die hohe Endklebkraft auf Lacken und Glasflächen ermöglicht zwar eine hohe Verklebungssicherheit, erfordert aber einen unverhältnismäßig großen Kraftaufwand beim Abziehen der Folie, was bei Personal, das täglich mit dem Demaskieren beschäftigt ist, zu gesundheitlichen Beeinträchtigungen führen kann. Es kommt bedingt durch die hohe Klebkraft überdies zu häufigem Reißen beim Demaskieren, so daß die Folie nicht in einem Stück entfernt werden kann.

Zur Depression von Klebkräften können in die Klebmassen bekanntlich Füllstoffe oder Weichmacher eingearbeitet werden. Als Füllstoffe kommen beispielsweise Kreide, Zinkoxid oder Silicate in Frage. Diese reduzieren zwar wirkungsvoll die Klebkraft, verursachen aber Untergrundbeeinträchtigungen auf empfindlichen Oberflächen, zum Beispiel flächenhafte Mattierungen auf glänzenden Lackflächen.
Weichmacher wie Wachse, Öle oder niedermolekulare Kautschuke leisten zwar ebenfalls eine Änderung des Klebverhaltens. Diese können aber insbesondere bei hohen Temperaturen ausschwitzen und Beläge bilden oder die Kohäsivität der Masse verringern, was vorwiegend an den Kanten und in Falten zu Masserückständen führen kann.
Eine besondere Gefahr geht von den niedermolekularen Substanzen aus, die in die Oberflächen hineindiffundieren können und dort Anquellungen verursachen oder gar nach Sonnenstrahlung (UV-Lichteinwirkung) verfärbend wirken.

Aufgabe der Erfindung ist es, eine Selbstklebemassenzusammensetzung für Oberflächenschutzfolien zur Verfügung zu stellen sowie Folien, die mit der erfindungsgemäßen Selbstklebemassenzusammensetzung beschichtet sind, die die geschilderten Nachteile des Standes der Technik nicht oder nicht in dem Maße zeigen. Insbesondere soll die Klebemasse neben einer ausgeprägten Initialklebkraft über eine ausgewogene Endklebkraft verfügen, die ein selbsttätiges Ablösen der Folie zum Beispiel durch Wind verhindert, wobei die Folie ohne außerordentlichen Kraftaufwand abziehbar sein soll.

Gelöst wird diese Aufgabe durch eine Klebmassezusammensetzung, wie sie im Hauptanspruch niedergelegt ist. Gegenstand der Unteransprüche sind dabei vorteilhafte Weiterbildungen der Klebmassezusammensetzung sowie die Verwendung der Klebmasse auf Oberflächenschutzfolien.

Demgemäß betrifft die Erfindung die Formulierung einer Selbstklebemasse für einen Oberflächenschutz enthaltend ein Basispolymer aus Polyethylenvinylacetat (EVA) mit einem Vinylacetatanteil von 40 bis 80 Gew.-% und einem Schmelzindex MFI nach ISO 1133 (A/4) von 0,5 bis 25 g/10 min bei 190 °C und 2,16 kg, das mit einem Polyether mit einem Anteil von 1 bis 35 Gew.-% der Form

XO-[(CH₂)₄-O]-Y (1)

oder

XO-[(CH(CH₃)-CH₂-O]-Y (2),

mit einem Molekulargewichtsmittelwert M_{w} = 200 bis 100.000 g/mol abgemischt ist, wobei X und Y gewählt werden aus der Gruppe H-, (CₙH₂ₙ₊₁)- mit n = 1 bis 20, CH₂=CHCO-, CH₃CH(NH₂)CH₂-, 2,3-Epoxypropyl-, C₆H₅-CO-, CH₂=C(CH₃)-CO-.

In einer bevorzugten Ausführungsform setzt sich die Klebemasse wie folgt zusammen:
- 65 bis 98 Gew.-%, bevorzugt 75 bis 95 Gew.-% EVA,
wobei das EVA insbesondere einen VA-Anteil von 40 bis 80 Gew.-%, bevorzugt 50 bis 65 Gew.-% und einem Schmelzindex MFI von 0,5 bis 25 g/10 min bei 190 °C und 2,16 kg, bevorzugt 1 bis 5 g/10 min bei 190 °C und 2,16 kg aufweisen kann oder Mischungen verschiedener EVA-Typen innerhalb dieser Grenzen, und
- 2 bis 35 Gew.-%, bevorzugt 5 bis 20 Gew.-% eines Polyethers des Typs (1) oder (2) mit einem Molekulargewichtsmittelwert M_{w} = 200 bis 100.000 g/mol, bevorzugt 1000 bis 20.000 g/mol.

Das EVA in der beschriebenen Form bildet dabei das Polymergrundgerüst der Klebmasse mit einem mäßig ausgeprägten Tack auf polierten beziehungsweise glänzenden Metall-, Kunststoff, Glas- und Lackoberflächen und einer rasch ansteigenden Klebkraft darauf, die innerhalb einiger Tage ihren Endwert annimmt, wobei dieser unter Wärmeeinwirkung beschleunigt erreicht wird.
Da es sich um ein chemisch unvemetztes Polymergerüst handelt, das aufgrund seines Monomerverhältnisses nur sehr schwach kristallin ist, nimmt das Molekulargewicht, das direkt mit dem MFI korreliert, eine entscheidende Stellung in Bezug auf die Kohäsivität der Klebmasse ein. Ein MFI von 1 bis 5 hat sich dabei als günstiger Wert erwiesen. Die Zumischung eines Teils des EVA mit einem MFI von bis zu 25 kann aber zur Fließeigenschaftsverbesserung beitragen, wenn die Klebmasse aus der Schmelze aufgebracht oder zusammen mit einem Träger coextrudiert werden soll.

Der Zusatz der beschriebenen Polyether wirkt klebkraftreduzierend bei gleichzeitigem Erhalt der erforderlichen Anfaßklebrigkeit, der Alterungsstabilität, der gesundheitlichen und umweltmäßigen Unbedenklichkeit, der Verfärbungsfreiheit auch von weißen Untergründen und der Belagsfreiheit der beklebten Oberflächen nach dem Demaskieren. Je nach Empfindlichkeit der zu schützenden Oberflächen erweisen sich unterschiedliche Molmassen als geeignet, um ein Einwandern und damit verbunden ein Anquellen besonders von Kunststoff und Lackoberflächen zu verhindern.
Auch das Abrollverhalten der zu Rollen gewickelten Schutzfolien, die mit dieser Klebmasse hergestellt werden, ist gegenüber einer reinen EVA-Masse deutlich reduziert. Je nach Anteil des zugemischten Polyethers läßt sich die klebkraftreduzierende Wirkung stufenlos regeln.

Besonders vorteilhaft läßt sich die erfindungsgemäße Selbstklebemasse auf Trägermaterialien wie Folien verwenden, woraus sich eine hervorragende Oberflächenschutzfolie ergibt.

Die Klebmasse läßt sich sowohl aus Lösung als auch aus der Schmelze, d.h. als Hotmelt, oder durch Coextrusion verarbeiten. Vorteilhaft ist eine Auftragsstärke von 12 bis 30 g/m². Sie gewährleistet ein ausreichendes Massepolster, um bündig aufzufließen und zeigt die beste Verträglichkeit mit empfindlichen Oberflächen, ohne daß es zu nennenswerten Masserückständen kommt.

Als Oberflächenschutz eignen sich ganz besonders ungereckte Folien, die eine ausreichende Flexibilität haben, um auch auf gewölbten Flächen nahezu faltenfrei verklebt werden zu können. Als Polymere eignen sich insbesondere Polyethylen, Polypropylen, Propylenethylencopolymere oder Mischungen aus solchen.

Diese bedürfen zur Sicherstellung einer anwendungsgerechten Langlebigkeit der Folie bei Freibewitterung einer UV-Stabilisierung. Besonders geeignet sind HALS-Lichtschutzmittel wie zum Beispiel Dimethylsuccinat-Polymer mit 4-Hydroxy-2,2,6,6-tetramethyl-1-piperidinethanol (CAS-Nr. 65447-77-0), Bis(2,2,6,6-tetramethyl-4-piperidinyl)sebacat (CAS-Nr. 52829-07-9) oder Poly[[6-[(1,1,3,3-tetramethyl butyl) amino]-1,3,5-triazine-2,4-diyl][[(2,2,6,6-tetramethyl-4-piperidyl) imino] hexamethylene [(2,2,6,6-tetramethyl-4-piperidyl) imino]] (CAS-Nr. 70624-18-9). Die Menge des Lichtschutzmittels sollte mindestens 0,15, vorzugsweise mindestens 0,30 Gew.-% bezogen auf die Trägerfolie betragen.

Ein zusätzlicher Lichtschutz wird durch Füllstoffe wie Titandioxid erreicht, die der Folie dadurch zusätzlich eine Weißfärbung geben, die bei undurchsichtigen Flächen häufig erwünscht ist. Zum Schutz von transparenten Flächen wie zum Beispiel Automobilscheiben sollte die Folie hingegen glasklar sein, damit auch durch die geschützte Scheibe hindurch gesehen werden kann. Hier verbieten sich Pigmente und Füllstoffe.

Die erfindungsgemäße Klebmasse muß auf PO-Folien durch geeignete Primer verankert werden, wobei sich besonders EVA-Typen mit einem VA-Anteil von 20 bis 30 Gew.-% eignen. Auch eine Coronavorbehandlung ist für den Fall der Beschichtung aus Lösung wirksam.

Obwohl die erfindungsgemäße Klebmasse eine reduzierte Klebkraft auf der eigenen Rückseite gegenüber einer reinen EVA-Klebmasse aufweist, kann zum leichteren Abrollen, besonders von sehr breiten Oberflächenschutzprodukten in aufgerollter Form von bis zu 2 m Breite, ein zusätzlicher Trennlack vorteilhaft sein, dessen wirksame Bestandteile zum Beispiel Silikone oder Wachse sein können. Andernfalls kann es bei der Abwicklung der bewußt dehnfähig ausgelegten Folie bereits zu irreversiblen Verdehnungen kommen.

Die erfindungsgemäße Klebemasse wird nachfolgend in bevorzugter Ausführung anhand mehrerer Verwendungsbeispiele von Oberflächenschutzfolien beschrieben, ohne damit die Erfindung in irgendeiner Weise beschränken zu wollen. Des weiteren sind zwei Vergleichsbeispiele aufgeführt, in denen ungeeignete Klebmassen und Oberflächenschutzfolien daraus dargestellt sind.

### Beispiele

### Beispiel 1

Eine 65 µm dicke Folie, bestehend aus einer 50 µm dicken Schicht aus 55 Gew.-Teilen Polyethylen, davon 40 Gew.-Teile schlagzähes Polyethylen, 35 Gew.-Teilen Polypropylen, 10 Gew.-Teilen TiO₂-Batch und 0,5 Gew.-Teilen HALS-Lichtschutzstabilisatoren und einer 15 µm dicken Schicht eines Primers aus 70 Gew.-Teilen Polyethylenvinylacetat mit 28 Gew.-% Vinylacetat-Anteil und 30 Gew.-Teilen Polyethylen, wurde mit einer Lösung von 90 Gew.-Teilen Polyethylenvinylacetat mit 50 Gew.-% Vinylacetat-Anteil und 10 Gew.-Teilen Poly-THF 2900 (BASF, Ludwigshafen, Deutschland) so bestrichen, daß nach dem Trocknen eine weiße Oberflächenschutzfolie von 85 µm Gesamtdicke resultierte. Diese wurde zu einer Rolle gewickelt.

Die klebtechnischen Eigenschaften sind untenstehend aufgeführt:

| **Parameter*** | **Meßwert, N/cm** |
|---|---|
| Klebkraft auf Stahl | 0,1 |
| Klebkraft auf Lack** nach 30 min | 0,2 |
| Klebkraft auf Lack** nach 3 d RT | 0,3 |
| Klebkraft auf Lack** nach 3 d 90 °C | 2,0 |
| Abzugskraft von der Rückseite nach 1 m 40 °C | 0,8 |

| | |
|---|---|
| * bei 300 mm/min, Winkel 180° (Abzugskraft 90°), 23 °C ± 1 °C, 50 % ± 5 % relativer Feuchte. | |
| ** 1K-PU Klarlack Duraclear II (BASF, Münster, Deutschland) | |

Die Folie ließ sich ohne großen Kraftaufwand und nennenswerte Verdehnungen von der Rolle abwickeln und faltenarm auf einer Motorhaube mit ausgeprägten Sicken als Beispiel für eine gewölbte, lackierte Oberfläche verkleben.

Die Anfangsklebkraft war ausreichend, d.h. es wurde kein Abflaggen an den Kanten der Folie beobachtet. Nach Lagerung der Motorhaube über 3 Tage bei 90 °C konnte die Folie ohne große Mühe und Zerreißen der Folie abgezogen werden. Auch bei ruckartigem Ziehen konnte kein Abplatzeffekt provoziert werden. An den Kanten wurden ca. 1 mm breite Folienschrumpf-bedingte Masserückstände beobachtet.

Bei einer Testfahrt mit Geschwindigkeiten von bis zu 160 km/h haftete die Folie sicher auf der Motorhaube des Testfahrzeugs.

### Beispiel 2

Eine 65 µm dicke Folie, bestehend aus einer 50 µm dicken Schicht aus 55 Gew.-Teilen Polyethylen, davon 40 Gew.-Teile schlagzähes Polyethylen, 35 Gew.-Teilen Polypropylen, 10 Gew.-Teilen TiO₂-Batch und 0,5 Gew.-Teilen HALS-Lichtschutzstabilisatoren und einer 15 µm dicken Schicht eines Primers aus 70 Gew.-Teilen Polyethylenvinylacetat mit 28 Gew.-% Vinylacetat-Anteil und 30 Gew.-Teilen Polyethylen, wurde mit einer Lösung von 92 Gew.-Teilen Polyethylenvinylacetat mit 50 Gew.-% Vinylacetat-Anteil und 8 Gew.-Teilen des Polyethers Arcol Polyol 1042 (Arco, Gent, Belgien) so bestrichen, daß nach dem Trocknen eine weiße Oberflächenschutzfolie von 85 µm Gesamtdicke resultierte. Diese wurde zu einer Rolle gewickelt.

Die klebtechnischen Eigenschaften sind untenstehend aufgeführt:

| **Parameter*** | **Meßwert, N/cm** |
|---|---|
| Klebkraft auf Stahl | 0,1 |
| Klebkraft auf Lack** nach 30 min | 0,3 |
| Klebkraft auf Lack** nach 3 d RT | 0,5 |
| Klebkraft auf Lack** nach 3 d 90 °C | 1,6 |
| Abzugskraft von der Rückseite nach 1 m 40 °C | 0,7 |

| | |
|---|---|
| * bei 300 mm/min, Winkel 180° (Abzugskraft 90°), 23 °C ± 1 °C, 50 % ± 5 % relativer Feuchte. | |
| ** 1K-PU Klarlack Duraclear II (BASF, Münster, Deutschland) | |

Die Folie ließ sich ohne großen Kraftaufwand und nennenswerte Verdehnungen von der Rolle abwickeln und faltenarm auf einer Motorhaube mit ausgeprägten Sicken als Beispiel für eine gewölbte, lackierte Oberfläche verkleben.

Die Anfangsklebkraft war ausreichend, d.h. es wurde kein Abflaggen an den Kanten der Folie beobachtet. Nach Lagerung der Motorhaube über 3 Tage bei 90 °C konnte die Folie ohne große Mühe und Zerreißen der Folie abgezogen werden. Auch bei ruckartigem Ziehen konnte kein Abplatzeffekt provoziert werden. An den Kanten wurden ca. 1 mm breite Folienschrumpf-bedingte Masserückstände beobachtet.

Bei einer Testfahrt mit Geschwindigkeiten von bis zu 160 km/h haftete die Folie sicher auf der Motorhaube des Testfahrzeugs.

### Beispiel 3

Eine 55 µm dicke Folie, bestehend aus einer 45 µm dicken Schicht aus 100 Gew.-Teilen eines Random-Propylenethylencopolymers und 1 Gew.-Teil HALS-Lichtschutzstabilisatoren und einer 10 µm dicken Schicht eines Primers aus 100 Gew.-Teilen Polyethylenvinylacetat mit 26 Gew.-% Vinylacetat-Anteil, wurde mit einer Lösung von 85 Gew.-Teilen Polyethylenvinylacetat mit 60 Gew.-% Vinylacetat-Anteil und 15 Gew.-Teilen Poly-THF 1000 (BASF, Ludwigshafen, Deutschland) so bestrichen, daß nach dem Trocknen eine transparente Oberflächenschutzfolie von 70 µm Gesamtdicke resultierte. Diese wurde stramm zu einer falten- und blasenfreien Rolle gewickelt.

Die klebtechnischen Eigenschaften sind untenstehend aufgeführt:

| **Parameter*** | **Meßwert, N/cm** |
|---|---|
| Klebkraft auf Stahl | 0,1 |
| Klebkraft auf Glas nach 30 min | 0,2 |
| Klebkraft auf Glas nach 3 d RT | 0,6 |
| Klebkraft auf Glas nach 3 d 90 °C | 1,3 |
| Abzugskraft von der Rückseite nach 1 m 40 °C | 0,7 |

| | |
|---|---|
| * bei 300 mm/min, Winkel 180° (Abzugskraft 90°), 23 °C ± 1 °C, 50 % ± 5 % relativer Feuchte. | |

Die Folie ließ sich ohne großen Kraftaufwand, frei von nennenswerten Verdehnungen und glatt, d.h. ohne Rattermarken, von der Rolle abwickeln und faltenfrei auf einer Windschutzscheibe des Volkswagen Golf IV als Beispiel für eine gewölbte, Glasoberfläche verkleben. Die Klebmasse benetzte das Glas in solcher Weise, daß nur sehr wenige die Durchsicht störende Luftbläschen eingeschlossen wurden. Diese hatten sich nach 24 Stunden nochmals verringert. Der optische Gesamteindruck der beklebten Scheibe war sehr befriedigend. Die Anfangsklebkraft war ausreichend, d.h. es wurde kein Abflaggen an den Kanten der Folie beobachtet. Nach Lagerung der Windschutzscheibe über 3 Tage bei 90 °C konnte die Folie ohne große Mühe und Zerreißen der Folie abgezogen werden. Auch bei ruckartigem Ziehen konnte kein Abplatzeffekt provoziert werden. An den Kanten wurden ca. 1 mm breite Folienschrumpf-bedingte Masserückstände beobachtet.

Bei einer Testfahrt mit Geschwindigkeiten von bis zu 160 km/h haftete die Folie sicher auf der Windschutzscheibe des Testfahrzeugs.

### Vergleichsbeispiel 4

Eine 65 µm dicke Folie, bestehend aus einer 50 µm dicken Schicht aus 55 Gew.-Teilen Polyethylen, davon 40 Gew.-Teile schlagzähes Polyethylen, 35 Gew.-Teilen Polypropylen, 10 Gew.-Teilen TiO₂-Batch und 0,5 Gew.-Teilen HALS-Lichtschutzstabilisatoren und einer 15 µm dicken Schicht eines Primers aus 70 Gew.-Teilen Polyethylenvinylacetat mit 28 Gew.-% Vinylacetat-Anteil und 30 Gew.-Teilen Polyethylen, wurde mit einer Lösung von 70 Gew.-Teilen Polyethylenvinylacetat mit 70 Gew.-% Vinylacetat-Anteil und 30 Gew.-Teilen Polyethylenvinylacetat mit 45 Gew.-% Vinylacetat-Anteil so bestrichen, daß nach dem Trocknen eine weiße Oberflächenschutzfolie von 85 µm Gesamtdicke resultierte. Diese wurde zu einer Rolle gewickelt.

Die klebtechnischen Eigenschaften sind untenstehend aufgeführt:

| **Parameter*** | **Meßwert, N/cm** |
|---|---|
| Klebkraft auf Stahl | 1,1 |
| Klebkraft auf Lack** nach 30 min | 0,4 |
| Klebkraft auf Lack** nach 3 d RT | 0,9 |
| Klebkraft auf Lack** nach 3 d 90 °C | 3,0 |
| Abzugskraft von der Rückseite nach 1 m 40 °C | 1,2 |

| | |
|---|---|
| * bei 300 mm/min, Winkel 180° (Abzugskraft 90°), 23 °C ± 1 °C, 50 % ± 5 % relativer Feuchte. | |
| ** 1K-PU Kladack Duraclear II (BASF, Münster, Deutschland) | |

Die Folie ließ sich nur mit großem Kraftaufwand und erheblichen Verdehnungen an den Anfaßstellen von der Rolle abwickeln, ansonsten aber faltenarm auf einer Motorhaube mit ausgeprägten Sicken als Beispiel für eine gewölbte, lackierte Oberfläche verkleben.

Die Anfangsklebkraft war ausreichend, d.h. es wurde kein Abflaggen an den Kanten der Folie beobachtet. Nach Lagerung der Motorhaube über 3 Tage bei 90 °C konnte die Folie nur unter großen Mühen z.T. stückchenweise abgezogen werden. Auch bei ruckartigem Ziehen konnte kein Abplatzeffekt provoziert werden. An den Kanten wurden ca. 1 mm breite Folienschrumpf-bedingte Masserückstände beobachtet.

Bei einer Testfahrt mit Geschwindigkeiten von bis zu 160 km/h haftete die Folie sicher auf der Motorhaube des Fahrzeugs.

### Vergleichsbeispiel 5

Eine 55 µm dicke Folie, bestehend aus 55 Gew.-Teilen Polyethylen, davon 40 Gew.-Teile schlagzähes Polyethylen, 35 Gew.-Teilen Polypropylen, 10 Gew.-Teilen TiO₂-Batch und 0,5 Gew.-Teilen HALS-Lichtschutzstabilisatoren, wurde mit der toluolischen Lösung einer Mischung aus Polyisobutylenen, von denen 12 Gew.-Teile ein Molekulargewichtsmittelwert M_{w} von 40.000 g/mol, 48 Gew.-Teile ein Molekulargewichtsmittelwert M_{w} von 900.000 g/mol und 40 Gew.-Teile ein Molekulargewichtsmittelwert M_{w} von 4,7 Millionen g/mol besaßen, so bestrichen, daß nach dem Trocknen eine weiße Oberflächenschutzfolie von 85 µm Gesamtdicke resultierte. Die Rückseite wurde mit einem Polyvinylstearylcarbamat-haltigen Trennlack beschichtet. Das Produkt wurde zu einer Rolle gewickelt.

Die klebtechnischen Eigenschaften sind untenstehend aufgeführt:

| **Parameter*** | **Meßwert, N/cm** |
|---|---|
| Klebkraft auf Stahl | 0,8 |
| Klebkraft auf Lack** nach 30 min | 0,05 |
| Klebkraft auf Lack** nach 3 d RT | 0,1 |
| Klebkraft auf Lack** nach 3 d 90 °C | 0,8 |
| Abzugskraft von der Rückseite*** nach 1 m 40 °C | 0,4 |

| | |
|---|---|
| * bei 300 mm/min, Winkel 180° (Abzugskraft 90°), 23 °C ± 1 °C, 50 % ± 5 % relativer Feuchte. | |
| ** 1K-PU Klarlack Duraclear II (BASF, Münster, Deutschland) | |
| *** mit Trennlack beschichtet | |

Die Folie ließ sich sehr leicht und ohne Verdehnungen an den Anfaßstellen von der Rolle abwickeln und faltenarm auf einer Motorhaube mit ausgeprägten Sicken als Beispiel für eine gewölbte, lackierte Oberfläche verkleben.

Die Anfangsklebkraft war nicht ausreichend, d.h. es wurde z.T. ein Abflaggen an den Kanten der Folie und ein herausziehen der Folie aus den Sicken beobachtet. Nach Lagerung der Motorhaube über 3 Tage bei 90 °C konnte die Folie sehr leicht abgezogen werden, da die Folie schon bei mäßiger Abziehgeschwindigkeit abplatzte. An den Kanten wurden ca. 1 mm breite Folienschrumpf-bedingte Masserückstände beobachtet.

Bei einer Testfahrt mit Geschwindigkeiten von bis zu 160 km/h löste sich die Folie ausgehend von kleinen Falten im Fahrtwind zugewandten Bereich großflächig ab.

## Patentansprüche

1. Selbstklebemasse, enthaltend ein Basispolymer aus Polyethylenvinylacetat (EVA) mit einem Vinylacetatanteil von 40 bis 80 Gew.-% und einem Schmelzindex MFI nach ISO 1133 (A/4) von 0,5 - 25 g/10 min bei 190°C und 2,16 kg, das mit einem Polyether mit einem Anteil von 1 bis 35 Gew.-% der Form
XO-[(CH₂)₄-O]-Y (1)
oder
XO-[(CH(CH₃)-CH₂-O]-Y (2)
mit einem Molekulargewichtsmittelwert M_{w} = 200 bis 100.000 g/mol abgemischt ist, wobei
X und Y gewählt werden aus der Gruppe H-, (CₙH₂ₙ₊₁)- mit n = 1 bis 20, CH₂=CHCO-, CH₃CH(NH₂)CH₂-, 2,3-Epoxypropyl- oder C₆H₅-CO-, CH₂=C(CH₃)-CO-.

2. Selbstklebemasse nach Anspruch 1, **dadurch gekennzeichnet, dass** die Selbstklebemasse folgende Zusammensetzung aufweist:
65 bis 98 Gew.-% EVA,
und
2 bis 35 Gew.-% eines Polyethers des Typs (1) oder (2) mit einem Molekulargewichtsmittelwert M_{w} = 200 bis 100.000 g/mol.

3. Selbstklebemasse nach Anspruch 2, **dadurch gekennzeichnet, dass** die Selbstklebemasse folgende Zusammensetzung aufweist:
75 bis 95 Gew.-% EVA,
und
5 bis 20 Gew.-% eines Polyethers des Typs (1) oder (2) mit einem Molekulargewichtsmittelwert M_{w} = 200 bis 100.000 g/mol

4. Selbstklebemasse nach Anspruch 2 oder 3, **dadurch gekennzeichnet, dass** das EVA einen VA-Anteil von 50 bis 65 Gew.-% und/oder einen Schmelzindex MFI von 1 bis 5 g/10 min bei 190 °C und 2,16 kg aufweist.

5. Selbstklebemasse nach zumindest einem der Ansprüche 2 bis 4, **dadurch gekennzeichnet, dass** das EVA eine Mischung verschiedener EVA-Typen innerhalb dieser Grenzen ist.

6. Verwendung der Selbstklebemasse nach zumindest einem der Ansprüche 1 bis 5 auf Trägermaterialien.

7. Verwendung nach Anspruch 6, wobei die Trägermaterialien Folien sind.

8. Verwendung der Selbstklebemasse nach zumindest einem der Ansprüche 6 oder 7 auf Trägermaterialien, wobei die Selbstklebemasse bevorzugt mit einer Auftragsstärke von 12 bis 30 g/m² aufgetragen ist.

9. Verwendung nach zumindest einem der Ansprüche 6 bis 8, wobei die Folien ungereckte Folien sind.

10. Verwendung nach zumindest einem der Ansprüche 6 bis 9, wobei den Folien Lichtschutzmittel zugesetzt sind.

11. Verwendung nach Anspruch 10, wobei den Folien Lichtschutzmittel zugesetzt sind in einer Menge von mindestens 0,15 Gew.-% bezogen auf die Folie.

12. Verwendung nach zumindest einem der Ansprüche 6 bis 11, wobei die Folien mit weiteren Zusatzstoffen wie Titandioxid abgemischt sind.

13. Verwendung nach zumindest einem der Ansprüche 6 bis 12, wobei zwischen Folie und Selbstklebemasse ein Primer vorhanden ist.

14. Verwendung nach zumindest einem der Ansprüche 6 bis 13, wobei die Folie einen Trennlack aufweist.

## Claims

1. Self-adhesive composition, comprising a base polymer of polyethylene-vinyl acetate (EVA) having a vinyl acetate fraction of from 40 to 80% by weight and a melt index MFI in accordance with ISO 1133 (A/4) of from 0.5 to 25 g/10 min at 190°C and 2.16 kg, which is blended with a polyether having a fraction of from 1 to 35% by weight of the form
XO-[(CH₂)₄-O]-Y (1)
or
XO-[(CH(CH₃)-CH₂-O]-Y (2)
having a weight-average molecular weight M_{w} of from 200 to 100,000 g/mol, X and Y being selected from the group consisting of H-, (CₙH₂ₙ₊₁)- where n is from 1 to 20, CH₂=CHCO-, CH₃CH(NH₂)CH₂-, 2,3-epoxypropyl, C₆H₅-CO-, and CH₂=C(CH₃)-CO-.

2. Self-adhesive composition according to Claim 1, **characterized in that** the self-adhesive composition has the following composition:
from 65 to 98% by weight of EVA,
and
from 2 to 35% by weight of a polyether of type (1) or (2) having a weight-average molecular weight M_{w} of from 200 to 100,000 g/mol.

3. Self-adhesive composition according to Claim 2, **characterized in that** the self-adhesive composition has the following composition:
from 75 to 95% by weight of EVA,
and
from 5 to 20% by weight of a polyether of type (1) or (2) having a weight-average molecular weight M_{w} of from 200 to 100,000 g/mol.

4. Self-adhesive composition according to Claim 2 or 3, **characterized in that** the EVA has a VA fraction of from 50 to 65% by weight and/or a melt index MFI of from 1 to 5 g/10 min at 190°C and 2.16 kg.

5. Self-adhesive composition according to at least one of Claims 2 to 4, **characterized in that** the EVA is a mixture of different EVA grades within these limits.

6. Use of the self-adhesive composition according to at least one of Claims 1 to 5 on backing materials.

7. Use according to Claim 6, where the backing materials are films

8. Use of the self-adhesive composition according to at least one of Claims 6 and 7 on backing materials, the self-adhesive composition being applied preferably at an application rate of from 12 to 30 g/m².

9. Use according to at least one of Claims 6 to 8, where the films are unoriented films.

10. Use according to at least one of Claims 6 to 9, where light stabilizers are added to the films.

11. Use according to Claim 10, where light stabilizers are added to the films in an amount of at least 0.15% by weight, based on the film.

12. The use according to at least one of Claims 6 to 11, where the films are blended with further additives such as titanium dioxide.

13. The use according to at least one of Claims 6 to 12, wherein there is a primer between film and self-adhesive composition.

14. The use as claimed at least one of Claims 6 to 13, where the film has a release coating.

## Revendications

1. Masse autoadhésive contenant un polymère de base à base de poly(éthylène - acétate de vinyle) (EVA) ayant une teneur en acétate de vinyle de 40 à 80% en poids et un indice de fusion MFI selon ISO 1133 (A/4) de 0,5 à 25 g/10 min. à 190°C et sous 2,16 kg, mélangé à un polyéther contenant une fraction de 1 à 35% en poids de
XO- [(CH₂) ₄-O]-Y (1)
ou
XO- [(CH(CH₃)-CH₂-O]-Y (2)
d'une moyenne pondérale de poids moléculaire M_{w} = 200 à 100 000 g/mole, X et Y étant choisis dans le groupe formé par H, (CₙH₂ₙ₊₁) avec n = 1 à 20, CH₂=CHCO-, CH₃CH (NH₂) CH₂-, 2,3-époxypropyle, ou C₆H₅CO-, CH₂=C (CH₃)-CO-.

2. Masse autoadhésive selon la revendication 1, **caractérisée en ce que** la masse autoadhésive présente la composition suivante :
65 à 98% en poids d'EVA
et
2 à 35% en poids d'un polyéther de type (1) ou (2), d'une moyenne pondérale de poids moléculaire M_{w} = 200 à 100 000 g/mole.

3. Masse autoadhésive selon la revendication 2, **caractérisée en ce que** la masse autoadhésive présente la composition suivante :
75 à 95% en poids d'EVA
et
5 à 20% en poids d'un polyéther de type (I) ou (2) d'une moyenne pondérale de poids moléculaire M_{w} = 200 à 100 000 g/mole.

4. Masse autoadhésive selon la revendication 2 ou 3, **caractérisée en ce que** l'EVA présente une fraction de VA de 50 à 65% en poids et/ou un indice de fusion MFI de 1 à 5 g/10 min. à 190°C et sous 2,16 kg.

5. Masse autoadhésive selon au moins l'une quelconque des revendications 2 à 4, **caractérisée en ce que** l'EVA est un mélange de différents types d'EVA dans ces limites.

6. Utilisation de la masse autoadhésive selon au moins l'une quelconque des revendications 1 à 5 sur des matériaux de support.

7. Utilisation selon la revendication 6, où les matériaux de support sont des films.

8. Utilisation de la masse autoadhésive selon au moins l'une quelconque des revendications 6 ou 7 sur des matériaux de support, où la masse autoadhésive est de préférence appliquée à un taux d'application de 12 à 30 g/m².

9. Utilisation selon au moins l'une quelconque des revendications 6 à 8, où les films sont des films non étirés.

10. Utilisation selon au moins l'une quelconque des revendications 6 à 9, où l'on ajoute aux films des photoprotecteurs.

11. Utilisation selon la revendication 10, où l'on ajoute aux films des photoprotecteurs en une quantité d'au moins 0,15% en poids, par rapport au film.

12. Utilisation selon au moins l'une quelconque des revendications 6 à 11, où l'on mélange aux films d'autres additifs tels que du dioxyde de titane.

13. Utilisation selon au moins l'une quelconque des revendications 6 à 12, où entre le film et la masse autoadhésive est présent un apprêt.

14. Utilisation selon au moins l'une quelconque des revendications 6 à 13, où le film présente un vernis de séparation.
